Europäisches Patentamt

European Patent Office

Office européen des brevets

(11) Publication number: **0 324 919**

**A2**

## EUROPEAN PATENT APPLICATION

(21) Application number: **88119441.9**

(22) Date of filing: **23.11.88**

(51) Int. Cl.4: **A61M 1/16 , B01D 13/00**

(30) Priority: **18.01.88 SE 8800137**

(43) Date of publication of application:
**26.07.89 Bulletin 89/30**

(84) Designated Contracting States:
**BE CH DE ES FR GB IT LI NL**

(71) Applicant: **GAMBRO AB**
**Post Box 10101**
**S-220 10 Lund(SE)**

(72) Inventor: **Flank, Hans Peder**
**Kommendörsgatan 7c**
**S-211 50 Malmö(SE)**
Inventor: **Nilsson, Nils-Joel Eddie**
**Trastvägen 6**
**S-280 10 Sösdala(SE)**
Inventor: **Riede, Gerhard**
**Möllevangsgatan 7**
**S-235 00 Vellinge(SE)**

(74) Representative: **Boberg, Nils Gunnar Erik**
**Gambro AB Patent Department Box 10101**
**S-220 10 Lund(SE)**

(54) **An arrangement for the diffusion and/or filtration of substances between two fluids.**

(57) An arrangement for the diffusion and/or filtration of substances between two fluids, comprising a stack of supporting plates (4) with membranes (5) arranged in between, contained in an outer enclosure (1) consisting of two enclosure parts (2,3) joined together to form a seal, the two enclosure parts (2,3) being held together by a retaining band (8) cast in situ.

The invention is characterized in that the band (8) is so arranged within scores or channels (9-12), communicating with one another and contained in respective enclosure parts, that any possibility of the casting pressure acting in the direction of the stack is reduced or wholly eliminated.

The arrangement in accordance with the invention is intended primarily to be used in connection with dialysis, haemodiafiltration, haemofiltration or similar extracorporeal procedures for the treatment of blood.

Fig. 4

## AN ARRANGEMENT FOR THE DIFFUSION AND/OR FILTRATION OF SUBSTANCES BETWEEN TWO FLUIDS

### TECHNICAL FIELD

The present invention relates to an arrangement for the diffusion and/or filtration of substances between two fluids, comprising a stack of supporting plates with membranes arranged in between, contained in an outer enclosure consisting of two enclosure parts joined together to form a seal, the two enclosure parts being held together by a retaining band cast in situ.

The arrangement in accordance with the invention is intended in particular to be used in connection with dialysis, haemodiafiltration, haemofiltration and similar extracorporeal procedures for the cleaning of blood. It will be obvious, though, to those versed in the art that it can also be used for other purposes, e g as an oxygenator. The term fluid thus refers to liquid as well as to gas.

### BACKGROUND ART

An arrangement of the above mentioned type is described, for example in the American patent 3 907 687. In this arrangement and in similar arrangements very high demands are made on the sealing, outwardly, as well as between the liquids flowing through the arrangement. In the embodiment according to figures 9 and 10 in the American patent specification, for example, the sealing outwards has been solved with the help of a retaining band cast in situ. One problem in connection with the casting of such a band is the high casting pressure which can deform the enclosure and affect the internal stack of supporting plates and intermediate membranes. Alternatively it may affect the shape of channels present inside the enclosure and consequently alter the operation of the arrangement.

### DISCLOSURE OF INVENTION

The above mentioned problem of casting pressure is solved in accordance with the invention in that the retaining band is so arranged within two scores or channels, communicating with one another and contained in respective enclosure parts, that the possibility of the casting pressure to act in the direction of the stack is reduced or wholly eliminated.

In the same manner as in the known arrangement, at least one, and preferably both, enclosure parts are designed in a substantially parallelepipedic boxlike shape with an outwards directed flange extending round the orifice of the respective enclosure part. The said scores and channels can be provided in these outwards directed flanges in a simple manner, as will be described in more detail in the following.

The said outwards directed flange preferably consists of an outer band which is connected with the remainder of the enclosure part through cross bars directed towards the latter with openings provided in between. In this way a substantial part of the casting pressure will be absorbed and compensated by tensile forces in the cross bars.

A simple design which at the same time is reliable from the point of view of sealing is obtained, if each part of the enclosure is designed with two scores or channels arranged on either side of the respective row of cross bars and openings provided in between. In this manner the retaining band can be made to consist of three partial bands which hang together thanks to the material which fills up the openings between the cross bars.

A reliable seal is achieved, if the retaining band is made to extend round the whole joining line between the two enclosure parts. However, if there are special reasons, the band can also be interrupted, in which case the break point has to be sealed in some other manner.

One or more nipples for the supply and/or withdrawal of one or both of the said fluids are appropriately provided cast in one piece with the retaining band. In this manner the number of components included is reduced at the same time as a very good seal is achieved naturally between the nipples and the rest of the arrangement.

Alternatively, or at the same time, the arrangement may be provided with one or more connecting openings for the supply and/or withdrawal of one or both the said fluids, cast in one piece with one or both the enclosure parts. Such a design may also be given a simple shape, at the same time as the sealing is assured.

The internal seal between the said fluids can be assured in that the stack of supporting plates and membranes arranged in between is arranged clamped between two inner walls of the respective enclosure part which are parallel with plates and membranes. In such a design the internal dimension of the enclosure, which is at right angles to the plates, is chosen smaller than the height of the stack, so that the latter is distinctly pressed together when the two enclosure parts are joined together.

## BRIEF DESCRIPTION OF DRAWINGS

Fig 1, 2 and 3 show three views perpendicular to each other of a complete arrangement in accordance with the invention.

Fig 4 shows a section along the line IV-IV in fig 1.

Fig 5, finally, shows a section along the line V-V in fig 4.


## BEST MODE OF CARRYING OUT THE INVENTION

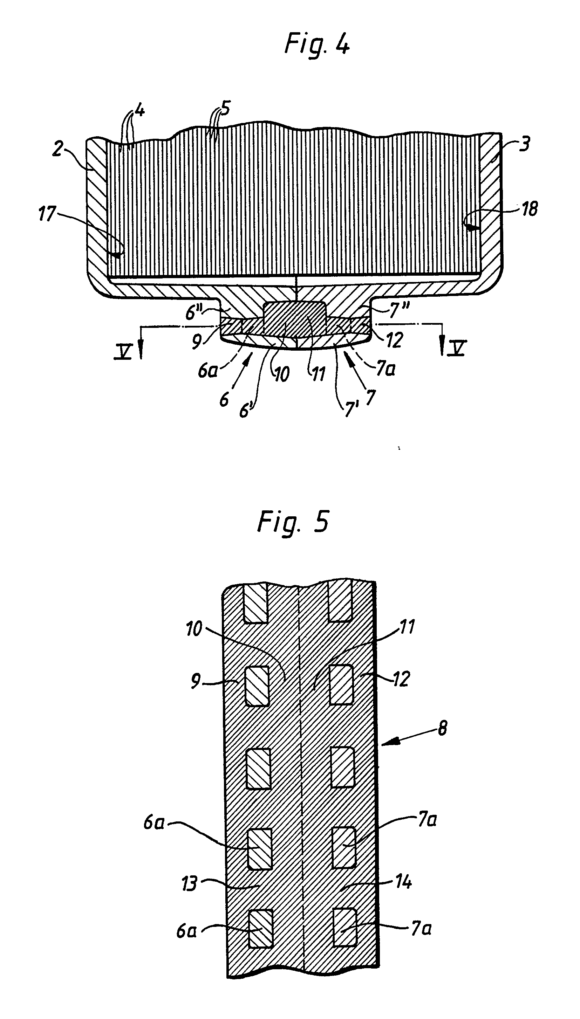

The embodiment of an arrangement in accordance with the invention, shown on the drawings by way of an example, consists of an outer enclosure, designated as a whole by reference 1, which comprises an upper part 2 and a lower part 3. As is evident best from figure 4, the enclosure contains a stack of supporting plates 4 and membranes 5 arranged in between. The membranes preferably are arranged in pairs between the supporting plates. The latter may be designed in many ways, but they are designed preferably in accordance with Swedish patent application 8800138-3 (our case GA 163) submitted at the same time. The two enclosure parts 2 and 3 are provided each with a flange which as a whole is designated 6 and 7, respectively. The flange 6 consists of an outer part 6′ and an inner part 6″ which are held together by cross bars 6a provided in between. In the same manner the flange 7 consists of an outer part 7′ and an inner part 7″, held together by cross bars 7a. The holding together of the two enclosure parts is achieved by means of the retaining band 8 cast in situ. This band fills up four continuous channels or scores 9, 10, 11 and 12 and the openings 13 and 14 between the cross bars 6a and 7a, respectively.

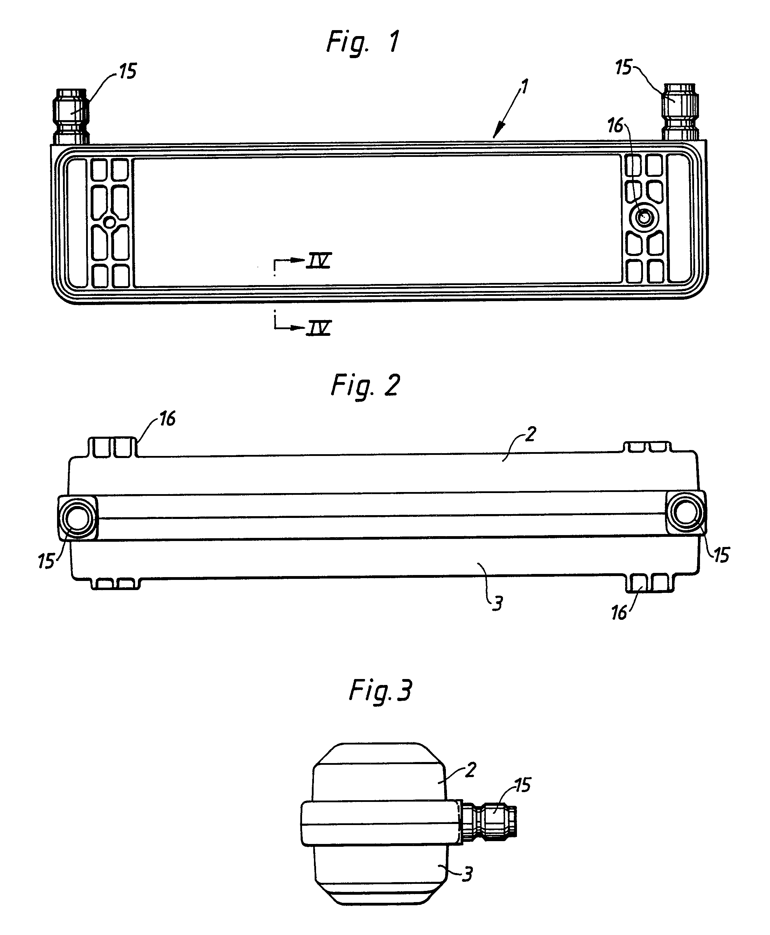

The nipples 15 shown in figures 1-3 are cast appropriately at the same time as the retaining band 8. In the same manner, the connecting openings 16 are cast appropriately in one piece with the respective enclosure parts 2 and 3. Reference numbers 17 and 18 finally designate two inner walls in the enclosure between which is clamped the stack of supporting plates and intermediate membranes.

Naturally the invention is not limited solely to the embodiment described above, but may be varied within the scope of the following claims. For example, the shape of the flanges 6 and 7 may be varied within wide limits. It is essential only that they should be designed in such manner that any possibility of the casting pressure acting in direction towards the stack is reduced or wholly eliminated.

## Claims

1. An arrangement for the diffusion and/or filtration of substances between two fluids, comprising a stack of supporting plates (4) with membranes (5) arranged in between, contained in an outer enclosure (1) consisting of two enclosure parts (2,3) joined together to form a seal, the two enclosure parts (2,3) being held together by a retaining band (8) cast in situ, **characterized** in that the band (8) is so arranged within scores or channels (9-12), communicating with one another and contained in respectcive enclosure parts, that the possibility of the casting pressure to act in the direction of the stack is reduced or wholly eliminated.

2. An arrangement in accordance with claim 1, **characterized** in that at least one and preferably both of the enclosure parts (2,3) are of a substantially parallelepipedic boxlike shape.

3. An arrangement in accordance with claim 1 or 2, **characterized** in that the said scores or channels are arranged in a flange (6,7) extending round the orifice of the respective enclosure part.

4. An arrangement in accordance with claim 3, **characterized** in that the said outwards directed flange consists of an outer band (6′,7′) which is connected with the remainder of the enclosure part through cross bars (6a,7a) directed towards the latter with openings (13,14) provided in between.

5. An arrangement in accordance with claim 4, **characterized** in that each enclosure part (2,3) comprises two scores or channels (9,10 and 11,12, respectively) arranged on either side of the respective row of cross bars and openings (13,14) provided in between.

6. An arrangement in accordance with anyone of the preceding claims, **characterizing** in that the retaining band (8) extends round the whole joining line between the two enclosure parts (2,3).

7. An arrangement in accordance with anyone of the preceding claims, **characterizing** by one or more nipples (15) for the supply and/or withdrawal of one or both of the said fluids, cast in one piece with the retaining band.

8. An arrangement in accordance with anyone of the preceding claims, **characterized** by one or more connecting openings (16) for the supply and/or withdrawal of one or both of the said fluids, cast in one piece with one or both of the enclosure parts.

9. An arrangement in accordance with anyone of the preceding claims, **characterized** in that the stack of supporting plates (4) and membranes (5) arranged in between is clamped between two inner walls (17,18) of the respective enclosure part (2,3) which are parallel with plates and membranes.

Fig. 1

Fig. 2

Fig. 3

*Fig. 4*

*Fig. 5*